(19) Europäisches Patentamt
European Patent Office
Office européen des brevets

(11) Publication number: **0 002 522**
**A1**

(12) # EUROPEAN PATENT APPLICATION

(21) Application number: 78101666.2

(22) Date of filing: 13.12.78

(51) Int. Cl.[2]: C 08 F 110/08
C 08 F 4/64, C 08 F 4/02

(30) Priority: 14.12.77 US 860520

(43) Date of publication of application: 27.06.79 Bulletin 79/13

(84) Designated contracting states: BE DE FR GB IT

(71) Applicant: PHILLIPS Petroleum Company
Bartlesville, Oklahoma 74004(US)

(72) Inventor: Selman, Charles Melvin
5120 Parsons Drive
Bartlesville Oklahoma(US)

(74) Representative: Geissler, Bernhard, Dr.
Widenmayerstrasse 24
D-8000 München 22(DE)

(54) **Process for polymerizing butene-1.**

(57) Butene-1 is polymerized employing a catalyst system comprising (A) a component formed by intensive mixing (milling) of titanium halide, a Lewis base, anhydrous magnesium or manganese chloride, and an unsaturated additive (B) a trihydrocarbylaluminum, a further Lewis base and a dialkylaluminum halide.

EP 0 002 522 A1

Croydon Printing Company Ltd.

26 497 E
US No.24 872

# PROCESS FOR POLYMERIZING BUTENE-1

Poly(butene-1) remains an intriguing possibility, partly because of the ready availabilty of the monomer butene-1, partly because considerations of the structure of butene-1 show that it has a high potential as a useful monomer, provided methods could be found to polymerize it satisfactorily and effectively with good yields to a polymer with desirable molecular weights and other properties.

With the forecast that butene-1 may become cheaper in price than ethylene in a few years, poly(butene-1) looms as an important future polymer.

## Brief Description of the Invention

I have discovered that poly(butene-1) can be prepared in a slurry or a swollen semi-slurry polymerization process using unreacted monomer as diluent, utilizing a catalyst system of (A) a catalyst comprising component formed by intensive milling of titanium halide, a Lewis base, and anhydrous magnesium or manganous chloride, and an unsaturated additive (B) as co-catalyst comprising a trihydrocarbylaluminum compound, a further Lewis base, and a dialkylaluminum halide, at moderately low polymerization temperatures, at least as compared to the prior art.

The prior art generally teaches that productivities in polymerization of alpha monoolefins generally is lower at lower polymerization temperatures, and higher at higher polymerization temperatures. Oddly, and unexpectedly, I have discovered that using the catalyst system involved, that contray to the generalized teaching of the prior art, that in the polymerization of butene-1,that productivities are maximized at lower polymerization temperatures, rather than higher temperatures as might have otherwise been expected.

## Detailed Description of the Invention

My invention is concerned with stereospecific polymerization of butene-1 under reaction conditions by contact with the catalyst as described. The resulting poly(butene-1) is largely insoluble in n-hexane. The amount of insoluble polymer formed in my process generally ranges from about 90 to 98 weight percent, and commonly is in the range of about 94 to 96 weightpercent of total polymer formed. The small amount of other polymer is soluble and is largely amorphous in nature.

According to my process, poly(butene-1) is polymerized in a hydrocarbon diluent, preferably liquid butene-1, at temperatures ranging from about 70°F to 140°F (about 21°C to 60°C), more preferably at temperatures ranging from about 75°F to 105°F (about 24°C to 40°C). At the preferred temperatures in liquid butene-1, a suspension of swollen polymer in the diluent results from the polymerization. At temperatures above about 140°F in butene-1 diluent, a portion of the polymer dissolves to form a semi-solution. However, at that temperature, the yield of polymer decreases to about 1/2 that obtained at a reaction temperature of about 80°F (27°C).

1

Catalyst System

My process of polymerization of butene-1 employs a catalyst system which comprises (A) a catalyst comprising a milled admixture of titanium halide, Lewis base, anhydrous magnesium or manganous chloride, and an unsaturated additive, and (B) a cocatalyst comprising a trihydrocarbylaluminum compound, a further Lewis base, and a dialkylaluminum halide. The Lewis base employed in component (B) can be but need not be the same as employed in component (A). Preferably, the catalyst system will consist essentially of the defined components.

Component (A)
Titanium Halide

The titanium halide can be any of the di, tri, or tetrahalides of titanium, wherein the halogen can be bromine, chlorine, or iodine. These halogenated titanium compounds can be represented by $TiX_{4-n}R_n$, wherein X is the halogen, usually chlorine or bromine; R is alkyl, cycloalkyl, aryl, aryloxy , or alkoxy, preferably of 2 to 8 carbon atoms; and n is 0 or an integer of 1 to 3. Exemplary species include titanium tetrachloride, trichloro-n-octyltitanium, trichlorophenoxytitanium, dibromodimethyltitanium, tribromocyclohexyltitanium, iodotriethoxytitanium, trichlorocyclohexyloxytitanium and the like, alone, or in admixture. Presently preferred is titanium tetrachloride because of its ready availability and relatively low cost.

Lewis base

The Lewis base can be any of the compounds meeting the commonly accepted definition of a Lewis base, otherwise described as an electron donor compound.

Generally, any of the amines, amides, ethers, carboxylic acids, esters, ketones, nitriles, phosphines, or the like, known as Lewis bases, are suitable. For example, the Lewis base can be selected from aliphatic carboxylic acids, aromatic carboxylic acids, alkylesters of aliphatic carboxylic acids, alkylesters of aromatic carboxylic acids, aliphatic ethers, aromatic ethers, aliphatic ketones, aromatic ketones, aliphatic aldehydes, aliphatic alcohols, aromatic alcohols, aliphatic acid halides, aliphatic nitriles, aromatic nitriles, aliphatic amines, aromatic amines, aliphatic phosphines, aromatic phosphines, amides, those of mixed character, and the like, alone, or in admixture.

Exemplary amines respresented by $R'NH_2$, $R'_2NH$, $R'_3N$ include triethylamine, triphenylamine, diphenylamine, and the like. Exemplary amides represented by $R'CONH_2$ and $R'CONHR'$ include acetamide, butyramide, acetanilide , and the like. Exemplary ethers represented by $R'OR'$ include dimethyl ether, diethyl ether, dicyclohexyl ether, ethylbutylether, diphenyl ether, and the like. Exemplary carboxylic acids $R'-\overset{O}{\overset{\|}{C}}-OH$ include benzoic acid, acetic acid, and the like, and esters $R-\overset{O}{\overset{\|}{C}}-OR'$. Exemplary ketones represented by $R'\overset{O}{\overset{\|}{C}}R'$ include acetone, methyl n-butyl ketone, acetophenone, and the like. Exemplary nitriles represented by $R'CN$ include acetonitrile, isobutyronitrile, benzonitrile, and the like. Exemplary phosphines represented by $R'-\overset{R'}{\overset{|}{P}}-R'$ and $R'-\overset{R'}{\overset{|}{P}}-H$ include tributylphosphine, propyl-(n-pentyl)phosphine, triphenylphosphine, and the like. R' is a hydrocarbyl group and is alkyl, cycloalkyl, or aryl, preferably of 1 to 12 carbon atoms for convenience.

Presently preferred are the esters, and most preferred are the esters of aromatic carboxylic acids wherein the moiety derived from the alcohol is an aliphatic moiety, because the resulting catalysts exhibit high acitivity and good stereospecificity in polymerizing butene-1. These pre-

'erred esters can be represented by the formula:

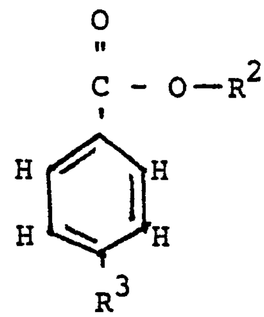

n the above formula $R^2$ represents an alkyl group of 1 to carbon atoms; and $R^3$ represents a para-substituent on he ring and is a monovalent radical selected from -H, -F, Cl, -Br, -I, -OH, -OR', -OOCR', -SH, $-NH_2$, -NHR', $-NR'_2$, -NHCOR', -NR'COR', $NO_2$, -CN, -CHO, -COR', -COOR', $-CONH_2$, $CONR'_2$, $-SO_2R'$, $-CX'_3$ where X' = F, Cl, Br, I, or hydrogen, and R' is as defined above.

Exemplary esters include ethyl benzoate, ethyl anisate (p-methoxybenzoate), ethyl p-dimethylaminobenzoate, ethyl p-fluorobenzoate, ethyl p-cyanobenzoate, methyl benzoate, isopropyl p-diethylaminobenzoate, butyl p-fluorobenzoate, n-propyl p-cyanobenzoate, ethyl p-trifluoromethylbenzoate, methyl p-hydroxybenzoate, ethyl p-methoxycarbonylbenzoate, methyl p-acetylbenzoate, isopropyl p-formylbenzoate, methyl p-nitrobenzoate, ethyl p-carbamoylbenzoate, methyl p-mercaptobenzoate, methyl p-chlorobenzoate, n-butyl p-bromobenzoate, isopropyl p-iodobenzoate, ethyl p-aminobenzoate, n-propyl p-methylaminobenzoate, methyl-p-acetamidobenzoate n-butyl p-formylbenzoate, dimethyl terephthalate, ethyl p-(N,N-dimethylcarbamoyl)benzoate, n-propyl p-(methylsulfonyl)benzoate, methyl p- trifluoromethylbenzoate, ethyl p-acetoxybenzoate, and mixtures thereof.

Presently preferred are ethyl benzoate or ethyl anisate, since particularly highly active catalysts are produced which exhibit very good stereospecificity in polymerizing butene-1.

## Magnesium or Manganous Chlorides

Magnesium or manganous chloride, or both are employed in the first component (A) of the catalyst system. Presently, magnesium chloride is preferred because of ready availability, low cost, low toxicity, and because more active catalysts are formed in its presence.

## Unsaturated Compound

The unsaturated compound employed in the (A) catalyst component of the catalyst system employed in my process is a unsaturated aliphatic hydrocarbon or unsaturated halogenated aliphatic hydrocarbon compound, wherein the unsaturation can be olefinic, diolefinic, or acetylenic. The aliphatic compounds can be straight or branched chain, and acyclic or cycloaliphatic types. As fas as operability is concerned, there presently appears no limit as to molecular size. Presently preferred are those of 2 to 20 carbon atoms, more preferably 2 to 12 carbon atoms, and presently most preferred are those of 3 to 10 carbon atoms per molecule, because of more convenient availability.

Exemplary compounds include ethylene, propylene, hexene-1, 4-methyl-cis-pentene-2, 2,3-dimethylbutene-1, neohexane, octene-1, diisobutylene, dodecene-1, 1,5-octadiene, 1,3,5-heptatriene, heptyne-1, hexyne-1, phenylacetylene, trichloroethylene, tetrachloroethylene, and the like, alone, or in admixture.

Presently preferred unsaturated components are the monoolefins because they presently have shown most effectiveness in reduced soluble polymer formation, increased productivities, and produce (result in) a dry powdery

catalyst easily recoverable from vibratory vessels. This last characteristic is dependent on the amounts of olefin used since too much liquid in the mill could result in an undesirably wet, muddy catalyst. However, this is not a problem since only small amounts of monoolefin result in good productivities and low soluble-polymer formation.

Of the monoolefins, presently preferred are hexene-1 and octene-1, and of these presently most preferred is hexene-1 from results obtained and because of ready availability and relative low cost.

## Preparation of Component (A)

The magnesium chloride, manganous chloride, or both, are employed substantially anhydrous, and in the form of a finely divided powder. The magnesium or manganous chloride can be preactivated by a grinding operation prior to the milling step used to form component (A), though such preactivation is not considered generally necessary.

While the ratio of the components in forming the first component (A) of the catalyst system employed in my process of polymerization of butene-1 can range widely as long as the final catalyst is effective, presently considered exemplary is a molar ratio of titanium halide: Lewis base in the range of about 0.5:1 to 4:1, presently preferred about 0.7:1 to about 2:1 because stereospecificity is more favored.

The molar ratio of the magnesium or manganous chloride, or both, to the titanium compound can range widely, as may be desired, as long as the final catalyst is effective, though presently considered exemplary is a molar ratio of magnesium chloride or manganous chloride: titanium halide in the range of about 4:1 to about 40:1,

presently preferred about 5:1 to about 20:1 because catalyst activity is particularly good in that range.

The quantity of unsaturated component incorporated in the catalyst component (A) can range widely, so long as it is that amount effective to produce the results desired. On an exemplary basis, this usually will be in the range of about 1 to 20 weight percent based on the weight of unsaturated component plus other components in (A), thus based on the total weight of catalyst (A), more preferably about 1.5 to 15 weight percent because in this range a dry free-flowing composite is obtained which does not form agglomerates or adhere to the milling vessel walls.

The unsaturated component employed in the catalyst component (A) conveniently should be a liquid at room temperatures as such are easily handled, though gaseous compounds can be employed if desired, for example, propylene or other normally gaseous unsaturated reactant.

Usually, the anhydrous magnesium chloride or manganous chloride is added to the milling means prior to addition of the other ingredients of Component (A), though the order of addition is not critical. The Lewis base and the titanium halide can be charged separately to the milling means, or can be premixed together to form an admixture, which may form an addition compound or complex of a Lewis base with the titanium compound, and this then can be charged to the milling means.

The components for catalyst component (A) are admixed in the milling means under intensive milling conditions. The milling employed is to be distinguished from ordinary admixing, shaking, or tumbling, or the like. The milling refers to the strong and thorough mixing of the several ingredients together, milling under milling

conditions, in such a manner as to afford significant reduction in the particle size. Milling can be by means of a ball mill, vibrating ball mill, tower mill, or the like. A typical specific mill employable is a vibratory mill such as a Vibratom, manufactured by Siebtechnik GmbH.

Milling can employ ambient, vacuum or other subatmospheric or superatmospheric, pressure, in an inert, dry, atmosphere such as nitrogen, argon, or the like. Milling may result in heat being produced, and where needed cooling means can be employed to avoid excessive temperatures over such as about 150°F (65°C) which may adversely affect catalyst performance. Milling times can range widely, such as from about 5 to 200 hours, presently preferred about 10 to 175 hours because the catalysts are sufficiently activated after this milling time. No advantage in activity is gained by exceeding the specified times. Vibratory milling typically takes a short time. Roll milling typically takes a longer time.

Component (B)

Component (B) comprises a trihydrocarbylaluminum compound, a further Lewis base, and a dialkylaluminum halide.

The trihydrocarbylaluminum compound can be represented by the formula $AlR'_3$ wherein each R' is as previously described. Exemplary trihydrocarbylaluminum compounds include trimethylaluminum, triethylaluminum, tri-n-dodecylaluminum, dimethylethylaluminum, tricycloheptylaluminum, triphenylaluminum, alone, or in admixture. Triethylaluminum presently is preferred because of its ready availability and particular effectiveness in my process.

The further Lewis base component of component (B) can be selected from any of those described hereinabove as Lewis bases.

The dialkylaluminum halide can be represented by $AlR^4{}_2X^2$, in which each $R^4$ is an alkyl radical, preferably of such as 1 to 12 carbon atoms per radical, and $X^2$ is a halogen atom and can be fluorine, chlorine, bromine, or iodine, though presently preferred are chlorine or bromine because of availability.

Exemplary compounds include dimethylaluminum bromide, diethylaluminum chloride, diethylaluminum fluoride, din-propylaluminum iodide, ethyl-t-butylaluminum bromide, bis-(2 -ethylhexyl)aluminum chloride, bis-n-dodecylaluminum chloride, alone, or in admixture. Diethylaluminum chloride presently is preferred because of ready availability, purity, and particular effectiveness in my process.

The molar ratio of the trihydrocarbylaluminum compound to the further Lewis base can range widely so long as the final catalyst is effective, presently considered exemplary is a ratio of about 0.5:1 to about 100:1, presently preferred about 1:1 to about 8:1, more preferred about 1:1 to 6:1, since active catalyst systems therewith display excellent stereospecificity.

The preferred further Lewis bases for this catalyst component (B) again are the aromatic esters, and presently most preferred are ethyl anisate and ethyl benzoate because of ready availability and effectiveness.

## Catalyst Component Ratios

The ratios of catalyst components (A) : (B) can range widely so long as the results desired are obtained and the ratios are effective to function as catalytic ratios. Presently considered exemplary are atom ratios of aluminum : titanium based on the trihydrocarbylaluminum component of about 1:1 to 2000:1, preferably about 25:1 to 1500:1. Presently considered exemplary are aluminum : titanium atom ratios based on the dialkylaluminum halide component of about 0.5:1 to 2000:1, preferably about 2:1 to 1500:1. Presently considered exemplary is total aluminum : titanium atom ratio of about 1.5:1 of about 2500:1, preferably about 10:1 to 1000:1.

## Polymerization Conditions

The catalyst components can be individually introduced into the reaction zone. The desired amounts can be added directly, or flushed in with portions of diluent, as may be convenient. The particular order of addition to the reactor means does not appear to be critical. However, usually the trihydrocarbylaluminum and the further Lewis base are premixed, for such as about 30 minutes, and may form and thus be employed as a complex before charging to the polymerization reactor.

A saturated hydrocarbon diluent can also be employed in admixture with butene-1 so as to conduct the butene-1 polymerization at butene-1/hydrocarbon volume ratios ranging from about 1:1 to 10:1. The inclusion of such reaction-inert hydrocarbon, however, appears to reduce polymer yields particularly at butene-1/hydrocarbon volume rations of about 1:2 or less. Exemplary hydrocarbons include isobutane, n-hexane, cyclohexane, methylcyclohexane, n-butane, n-pentane, n-heptane, n-octane,

and the like, alone, or in admixture.

Control of the molecular weight of the polymeric product can be exerted by maintaining a small amount of hydrogen during polymerization, and this is normally considered advantageous. The presence of hydrogen tends to decrease the molecular weight of the polymeric product.

The polymerization process can be carried out either continuously, or batchwise, as may be convenient, depending on desired output, equipment, and the like. The amount of catalyst employed in the polymerization of butene-1 conveniently can be related to the amount of component (A) employed relative to the total of monomer plus diluent if any. The amount of catalyst component (A), e.g., of all three components thereof, can vary from about 0.001 to 1 weight percent, preferably about 0.002 to 0.01 weight percent due to particularly good results in this range.

Of course, the catalyst components are, to some extent, sensitive to poisons such as water, air, and the like, and therefore equipment, diluent, butene-1, and the like, all should be maintained in a substantially anhydrous condition, or suitably dried prior to employment. The atmosphere of the polymerization system should be inert to the components, and gases such as nitrogen, argon, helium, suitable alkanes, and the like, can be employed. Polymerization starts almost immediately on combination of the catalyst components with the monomer, and is substantially complete generally within about 2 hours.

After completion of the polymerization reaction, or after suitable residence time in the reaction zone to obtain desired conversion, the contents of the reactor means then are discharged. The catalyst system can be inactivated by treating with an agent such as a lower

alcohol such as ethanol or methanol, the mixture then separated, and the polymer isolated. The poly(butene-1) can be purified as desired by such as drying under vacuum, and the like. The poly(butene-1) product can be treated for removal of solubles by contacting with hot n-hexane, n-heptane, etc., which dissolves the soluble amorphous material and leaves a white, solid, predominantly crystalline polymer as the final product.

## EXAMPLES

The examples provided are designed to assist one skilled in the art to a further understanding of the invention, without limiting the scope of the invention. Particular reactants, components, ratios, conditions employed, are exemplary, and not limitative of the reasonable scope of the invention herein described, of which these examples are a part of my overall disclosure.

## General Details

The runs were conducted in a one-liter stainless steel reactor equipped with a catalyst charge port, liquid butene-1 charging system with monomer reservoir charged with 500 - 600 psig (3440-4140 kPa gage) dry nitrogen, dip tube exit port, stirrer, and safety valve. Butene-1 monomer was dried before use by contact with activated alumina. Each reaction was initiated by adding in order to the reactor: catalyst (A), cocatalyst (B), hydrogen, and less than one liter of butene-1. Other diluents such as isobutane or cyclohexane were used on occasion in combination with butene-1. When cyclohexane was used, it was charged first. When isobutane was used, it was charged after the butene-1. In each run, the reactor and

contents were heated to the selected reaction temperature and the temperature then automatically controlled to within about ± 1°C. Conventional heating, cooling and control means were employed. After the temperature stabilized, the valve to the butene-1 charger was opened and the reactor thereafter was maintained liquid full throughout the polymerization.

Each polymerization was terminated by closing the valve to the butene-1 charger, then pressuring the reactor contents with nitrogen into a container containing about 100 ml methanol and an antioxidant solution equivalent to about 3 parts by weight antioxidant solution per 100 parts by weight reactor effluent. The antioxidant stock solution was made from

5 g of 2,6-di-t-butyl-4-methylphenol
10 g of tetrakis[methylene(3,5-di-t-butyl-4-hydroxyhydrocinnamate)]methane
20 g of dilaurylthiodipropionate
792 g of acetone.

Polymer remaining in the reactor was recovered by dissolving it in cyclohexane about 900 ml and about 5-10 ml methanol heated to about 200-225°F (93-107°C). The initial methanol additions were employed to deactivate organoaluminum compounds present. The hot solution then was added to the container, the reactor washed with about 900ml cyclohexane, and the washings also added to the container. The combined solutions and reactor effluent were stirred until dissolution of polymer was complete after which the polymer was recovered by coagulation with about 1 to 1.5 gallons of methanol. The coagulated polymer was separated and dried overnight in a vacuum oven maintained at about 185°F (85°C).

Hexane-soluble material from each run was determined by suspending a 2 to 3 g polymer sample in 75 ml n-hexane and stirring the mixture for 2 hours at room temperature. The liquid was decanted, the sample washed in order with equal volumes of n-hexane and of methanol, and dried overnight under vacuum at room temperature. The loss in weight represented the hexane-soluble polymer content of the sample. This method of determing soluble polymer was found to agree closely with the results obtained by extraction with boiling diethyl ether as described in U.S. 3,457,246 (footnote to Table I), issued 7/22/69, J.W. Cleary inventor.

Polymer melt index, g/10 minutes, was determined in accordance with ASTM D 1238-65T at 190°C with a 2160 g load.

The tensile and elongation values were determined in accordance with ASTM D 633-68 at 2" (5.08 cm) per minute.

Flexural modulus was determined in accordance with ASTM D 790-66.

Hardness, Shore D Values, were determined in accordance with ASTM D 2240-68.

Vicat softening temperature was determined in accordance with ASTM D 1525-65T.

The physical properties of the specimens were determined after aging the specimens 10 days under ordinary room conditions of temperature, pressure, and humidity.

## Example 1

The catalyst component (A) used in each run was prepared by intensive grinding on a vibratory ball mill for about 24 hours in a 3 liter vessel. Each catalyst component (A) consisted of 18 wt.% titanium tetrachloride (titanium equivalent to 4.6 wt.%), 60 wt.% magnesium chloride, 14 wt.% ethyl benzoate, and 8 wt.% hexene-1. Intensive grinding was carried out by cooling the mills with water, if necessary, so that the temperature during grinding did not exceed about 140°F (60°C).

A series of runs was carried out at several reaction temperatures, hydrogen pressures, aluminum/titanium mole ratios, and diluent types. The results are presented in Tables IA, IB. Physical properties of the resins prepared in some of the runs are presented in Table IC to illustrate typical values obtained.

Productivity is defined as the amount of solid polymer recovered from the reactor (total polymer, including both hexane soluble and hexane insoluble) based on polymer in grams per gram of catalyst component (A).

TABLE IA

Polymerizing Butene-1 Over Supported $TiCl_4$ Catalyst
Effects of Diluent, Temperature and Hydrogen
Cocatalyst(B) TEA:DEAC:EA Mole Ratio of 1.5:1.5:1

| Run No. | Catalyst(A) Total(A) Wt. mg | Catalyst(A) Calc. $TiCl_4$ m. moles | Al/Ti Mole Ratios TEA | Al/Ti Mole Ratios DEAC | Al/Ti Mole Ratios Total | Diluent Type | Diluent Volume Ratio | Hydrogen psi | Hydrogen kPa | Temperature °C | Temperature °F |
|---|---|---|---|---|---|---|---|---|---|---|---|
| 1 | 33.0 | 0.032 | 156 | 156 | 312 | Butene-1 | - | 40 | 276 | 21 | 70 |
| 2 | 26.9 | 0.026 | 190 | 190 | 380 | Butene-1 | - | 10 | 68.9 | 27 | 80 |
| 3 | 36.0 | 0.035 | 141 | 141 | 282 | Butene-1 | - | 20 | 138 | 27 | 80 |
| 4 | 40.5 | 0.039 | 127 | 127 | 254 | Butene-1 | - | 40 | 276 | 27 | 80 |
| 5 | 34.6 | 0.033 | 150 | 150 | 300 | Butene-1 | - | 60 | 414 | 27 | 80 |
| 6 | 28.4 | 0.027 | 183 | 183 | 366 | Butene-1 | - | 20 | 138 | 60 | 140 |
| 7 | 29.9 | 0.029 | 171 | 171 | 342 | Butene-1/Isobutane | 1/3 | 40 | 276 | 27 | 80 |
| 8 | 39.9 | 0.038 | 130 | 130 | 260 | Butene-1/Isobutane | 1/1 | 40 | 276 | 27 | 80 |
| 9 | 36.9 | 0.035 | 141 | 141 | 282 | Butene-1/Isobutane | 3/1 | 40 | 276 | 27 | 80 |
| 10 | 25.0 | 0.024 | 206 | 206 | 412 | Butene-1/Cyclohexane | 1/1 | 40 | 276 | 27 | 80 |
| 11 | 36.0 | 0.035 | 141 | 141 | 282 | Butene-1/Cyclohexane | 1/1 | 40 | 276 | 60 | 140 |

TEA = triethylaluminum DEAC = diethylaluminum chloride EA = ethyl anisate

Notes: All runs were 1 hour in length.
Exotherm from heat of reaction often caused temperatures to range between 28 - 35°C (82 - 95°F) for runs made at 27°C.

TABLE IA continued
Polymerizing Butene-1 Over Supported $TiCl_4$ Catalyst
Effects of Diluent, Temperature and Hydrogen
Cocatalyst(B) TEA:DEAC:EA Mole Ratio of 1.5:1.5:1

| | | Product | | |
|---|---|---|---|---|
| Run No. | Yield g | Productivity g/g Catalyst Component(A) | Hexane Insoluble % | Melt Index g/10 min. |
| 1 | 41.0 | 1240 | 95 | 2.8 |
| 2 | 55.0 | 2045 | 94 | 0.3 |
| 3 | 81.1 | 2255 | 95 | 1.0 |
| 4 | 84.0 | 2075 | 95 | 2.5 |
| 5 | 71.0 | 2050 | 95 | 5.0 |
| 6 | 36.7 | 1290 | 94 | 4.0 |
| 7 | 4.0 | 135 | 90 | not determined |
| 8 | 17.0 | 425 | 92 | 20.0 |
| 9 | 56.1 | 1520 | 95 | 6.0 |
| 10 | 22.0 | 880 | 95 | 7.9 |
| 11 | 31.0 | 860 | 93 | 82.0 |

TEA = triethylaluminum    DEAC = diethylaluminum chloride
EA = ethyl anisate

Notes: All runs were 1 hour in length.
Exotherm from heat or reaction often caused temperatures to range between 28 - 35°C (82 - 95°F) for runs made at 27°C.

TABLE IB

Polymerizing Butene-1 Over Supported $TiCl_4$ Catalyst
Productivity Dependence On Reaction Time
Cocatalyst(B) TEA:DEAC:EA Mole Ratio Of 1.5:1.5:1.0

| Run No. | Catalyst(A) Total(A) Wt. mg | Catalyst(A) Calc. $TiCl_4$ m. moles | Al/Ti Mole Ratios TEA | Al/Ti Mole Ratios DEAC | Al/Ti Mole Ratios Total | Diluent Type | Diluent Volume Ratio | Hydrogen psi | Hydrogen kPa | Temperature °C | Temperature °F |
|---|---|---|---|---|---|---|---|---|---|---|---|
| 11 | 33.0 | 0.032 | 156 | 156 | 312 | Butene-1 | - | 40 | 276. | 21 | 70 |
| 12 | 32.6 | 0.031 | 160 | 160 | 320 | Butene-1 | - | 40 | 276. | 21 | 70 |
| 13 | 36.9 | 0.036 | 138 | 138 | 276 | Butene-1 | - | 40 | 276. | 27 | 80 |
| 14 | 30.6 | 0.029 | 171 | 171 | 342 | Butene-1 | - | 40 | 276. | 27 | 80 |
| 15 | 26.5 | 0.025 | 199 | 199 | 398 | Butene-1 | - | 40 | 276. | 27 | 80 |
| 16 | 28.4 | 0.027 | 183 | 183 | 366 | Butene-1 | - | 20 | 138. | 60 | 140 |
| 17 | 22.3 | 0.022 | 226 | 226 | 452 | Butene-1 | - | 20 | 138. | 60 | 140 |
| 18 | 25.0 | 0.024 | 206 | 206 | 412 | Butene-1/Cyclohexane | 1/1 | 40 | 276. | 27 | 80 |
| 19 | 29.6 | 0.028 | 177 | 177 | 354 | Butene-1/Cyclohexane | 1/1 | 40 | 276. | 27 | 80 |
| 20 | 38.9 | 0.037 | 134 | 134 | 268 | Butene-1/Cyclohexane | 1/1 | 2 | 13.8 | 27 | 80 |
| 21 | 32.4 | 0.031 | 160 | 160 | 320 | Butene-1/Cyclohexane | 1/1 | 2 | 13.8 | 60 | 140 |
| 22 | 44.5 | 0.043 | 115 | 115 | 230 | Butene-1/Cyclohexane | 1/1 | 2 | 13.8 | 60 | 140 |

Note: Exotherm from heat of reaction often caused temperatures to range between 28 - 35°C (82 - 95°F) for runs made at 27°C.

TABLE IB continued

Polymerizing Butene-1 Over Supported $TiCl_4$ Catalyst
Productivity Dependence On Reaction Time
Cocatalyst(B) TEA:DEAC:EA Mole Ratio Of 1.5:1.5:1.0

| | Product | | | | |
|---|---|---|---|---|---|
| Run No. | Yield g | Productivity g/g Catalyst Component (A) | hrs. | Hexane Insoluble % | Melt Index g/10 min. |
| 11 | 41.0 | 1240 | 1.0 | 95 | 2.8 |
| 12 | 53.0 | 1625 | 2.5 | 94 | 3.7 |
| 13 | 75.1 | 2035 | 1.0 | 96 | 2.0 |
| 14 | 109.8 | 3590 | 2.5 | 95 | 2.9 |
| 15 | 107.2 | 4045 | 3.5 | 96 | 2.4 |
| 16 | 36.7 | 1290 | 1.0 | 94 | 4.0 |
| 17 | 33.0 | 1580 | 2.5 | 94 | 3.5 |
| 18 | 22.0 | 880 | 1.0 | 95 | 7.9 |
| 1[illegible] | 60.5 | 2045 | 2.5 | 96 | 9.8 |
| 20 | 71.1 | 1825 | 2.5 | 96 | 0.1 |
| 21 | 26.8 | 825 | 1.0 | 96 | 1.1 |
| 22 | 43.1 | 970 | 2.5 | 93 | 1.3 |

Note: Exotherm from heat of reaction often caused temperatures to range between 28 - 35°C (82 - 95°F) for runs made at 27°C.

Table IC

Physical Properties of Butene-1 Homopolymers

| Run No. | 2 | 3 | 13 | 4 | 14 | 5 |
|---|---|---|---|---|---|---|
| Melt Index | 0.3 | 1.0 | 2.0 | 2.5 | 2.9 | 5.0 |
| Density, g/cc | 0.9196 | 0.9219 | 0.9284 | 0.9232 | 0.9222 | 0.9252 |
| Flexural modulus | | | | | | |
| psi | 49,000 | 45,000 | 50,000 | 44,000 | 51,000 | 51,000 |
| MPa | 337.8 | 310.3 | 344.7 | 303.4 | 351.6 | 351.6 |
| Tensile Yield | | | | | | |
| psi | 2200 | 2420 | 2460 | 2750 | 2170 | 2750 |
| MPa | 15.17 | 16.69 | 16.96 | 18.96 | 14.96 | 18.96 |
| Tensile break | | | | | | |
| psi | 4050 | 4200 | 3670 | 3680 | 3740 | 3060 |
| MPa | 27.92 | 28.96 | 25.30 | 25.37 | 25.79 | 21.10 |
| Elongation,% | 320 | 373 | 640 | 300 | 280 | 233 |
| Vicat temperature | | | | | | |
| °F | 248 | 236 | 238 | 174 | 230 | 237 |
| °C | 120 | 113 | 114 | 79 | 110 | 114 |
| Hardness, Shore D | 55 | 62 | 63 | 62 | 58 | 62 |

Note: Properties were measured 10 days after molding. Specimens were conditioned at ambient room temperature and humidity.

Inspection of the data presented in Tables IA and IB shows that the best yields of polymer are obtained at about 27°C in liquid butene-1. At 21°C and at 60°C, the polymer yields are approximately halved. The behavior of the catalyst toward butene-1 polymerization differs from that toward propylene polymerization. Thus, catalyst activity is greater at about 27°C than at about 60°C for butene-1 polymerization which is opposite to that experienced with propylene polymerization. Another surprising discovery with butene-1 polymerization with the catalyst is the unaltered specificity to hexane insoluble polymer and continued activity after 3.5 hours exhibited. These points are demonstrated in Runs 13-15 of Table IB.

When a saturated hydrocarbon diluent is mixed with butene-1, the results show that polymer yields are decreased although specifictiy remains generally high.

The data presented in Table IC show representative physical properties of a few of the polymers made in the invention process. The physical properties obtained indicate that the polymers can be fabricated into such useful end products as pipe, film, containers and the like.

## Example II

Additional runs were made using portions of the same catalyst and the same procedures employed in Example I. In this Example, all runs were conducted in liquid butene-1 at about 27°C. Various aluminum/titanium mole catalyst ratios and various cocatalyst (B) combinations were employed. The results are presented in Table II.

TABLE II

Polymerizing Butene-1 Over Supported $TiCl_4$ Catalyst At 27°C In Liquid Butene-1

Influence Of Cocatalyst Composition

| Run No. | Catalyst (A) Total (A) Wt. mg | Catalyst (A) Calc. $TiCl_4$ m. moles | Cocatalyst (B) Mole Ratio TEA | Cocatalyst (B) Mole Ratio DEAC | Cocatalyst (B) Mole Ratio EA | Al/Ti Mole Ratios TEA | Al/Ti Mole Ratios DEAC | Al/Ti Mole Ratios Total | Hydrogen psi | Hydrogen kPa |
|---|---|---|---|---|---|---|---|---|---|---|
| 1 | 26.9 | 0.026 | 1.5 | 1.5 | 1.0 | 190 | 190 | 380 | 10 | 68.9 |
| 2 | 30.2 | 0.029 | 1.5 | 1.5 | 1.0 | 171 | 171 | 342 | 10 | 68.9 |
| 3 (1) | 35.3 | 0.034 | 1.5 | 1.5 | 1.0 | 146 | 146 | 292 | 10 | 68.9 |
| 4 | 36.9 | 0.035 | 1.5 | 1.5 | 1.0 | 141 | 141 | 282 | 40 | 276. |
| 5 | 26.0 | 0.025 | 1.5 | 1.5 | 1.0 | 198 | 198 | 396 | 40 | 276. |
| 6 | 38.0 | 0.037 | 1.5 | 1.5 (2) | 1.0 | 134 | 134 | 268 | 40 | 276. |
| 7 | 29.3 | 0.028 | 1.0 | 0 | 0 | 350 | 0 | 350 | 40 | 276. |
| 8 | 27.5 | 0.026 | 1.0 | 1.0 | 0 | 93 | 95 | 188 | 40 | 276. |
| 9 | 26.1 | 0.025 | 3.0 | 0 | 1.0 | 392 | 0 | 392 | 40 | 276. |
| 10 | 25.5 | 0.024 | 1.7 | 1.3 | 1.0 | 239 | 165 | 404 | 40 | 276. |
| 11 | 32.7 | 0.031 | 2.0 | 1.0 | 1.0 | 210 | 106 | 316 | 40 | 276. |
| 12 | 30.4 | 0.029 | 1.0 | 3.0 | 1.0 | 114 | 341 | 455 | 40 | 276. |
| 13 | 27.2 | 0.026 | 1.5 | 3.0 | 1.0 | 134 | 263 | 397 | 40 | 276. |
| 14 | 24.9 | 0.024 | 1.7 | 1.5 | 1.0 | 178 | 160 | 338 | 40 | 276. |
| 15 | 28.5 | 0.027 | 3.0 | 1.5 | 1.0 | 367 | 183 | 550 | 40 | 276. |

TABLE II
Polymerizing Butene-1 Over Supported $TiCl_4$ Catalyst
At 27°C In Liquid Butene-1
Influence of Cocatalyst Composition

| | Product | | | | |
|---|---|---|---|---|---|
| Run No. | Yield g | Productivity g/g Catalyst Component (A) | hrs. | Hexane Insoluble % | Melt Index g/10 min. |
| 1 | 55.0 | 2045 | 1.0 | 94 | 0.3 |
| 2 | 95.1 | 3150 | 2.5 | 98 | 0.3 |
| 3 | 113.0 | 3200 | 2.5 | 99 | 0.2 |
| 4 | 75.1 | 2035 | 1.0 | 96 | 2.0 |
| 5 | 88.2 | 3390 | 2.5 | 95 | 1.8 |
| 6 | 1.0 | 26 | 1.0 | not determ. | not determ. |
| 7 | 198.2 | 6765 | 0.5 | 42 | 21.0 |
| 8 | 137.0 | 4980 | 0.8 | 56 | 0.9 |
| 9 | 76.4 | 3395 | 2.5 | 97 | 0.2 |
| 10 | 97.0 | 3805 | 2.5 | 95 | 2.4 |
| 11 | 133.7 | 4090 | 2.5 | 97 | 0.7 |
| 12 | 73.2 | 2495 | 2.5 | 96 | 1.8 |
| 13 | 73.0 | 1895 | 1.0 | 95 | 4.1 |
| 14 | 69.1 | 2115 | 1.0 | 94 | 3.0 |
| 15 | 92.5 | 3270 | 1.0 | 93 | 5.2 |

Notes: (1) Catalyst sample prepared in 40 liter ball mill.

(2) Ethylaluminum dichloride used in place of DEAC.

Exotherm from heat of reaction often caused temperatures to range between 28 - 35°C (82 - 95°F).

Ethylaluminum dichloride cannot be substituted for diethylaluminum chloride in the cocatalyst (B) compositon as the very poor polymer yield obtained in Run 6 demonstrates. A high yield of polymer is obtained in the absence of DEAC and aromatic ester as Run 7 results show, but only 42 wt.% of the resulting polymer is hexane insoluble. A reductión in yield with somewhat better but still unacceptedly low specificity for hexane insoluble polymer is obtained with a cocatalyst (B) containing DEAC and TEA but no ester as Run 8 results demonstrate. It is evident that all three components of the cocatalyst (B) mixture are required to insure good yields of hexane insoluble polmyer. The results given in Run 11 demonstrate that under the conditions employed and with a TEA:DEAC mole ratio of 2:1, it is possible to obtain a productivity of about 4100 g of 97% hexane insoluble polymer per g catalyst (A) in 2.5 hours.

## Example III

Runs were made employing portions of the same catalyst and the same procedures employed in the earlier runs. However, ethyl benzoate was employed in the cocatalyst (B) compositions in place of ethyl anisate used previously. All runs were conducted in liquid butene-1 at various reaction temperatures employing various hydrogen concentrations and various cocatalayst compositions. The results are given in Table III.

TABLE III

Polymerizing Butene-1 Over Supported $TiCl_4$ Catalyst in Liquid Butene-1

Cocatalyst Composition Contains Ethyl Benzoate

| Run No. | Catalyst (A) Total (A) Wt. mg | Catalyst (A) Calc. $TiCl_4$ m. moles | Cocatalyst (B) Mole Ratio TEA | Cocatalyst (B) Mole Ratio DEAC | Cocatalyst (B) Mole Ratio EA | Al/Ti Mole Ratios TEA | Al/Ti Mole Ratios DEAC | Al/Ti Mole Ratios Total | Hydrogen psi | Hydrogen kPa | Reaction Temperature °C | Reaction Temperature °F |
|---|---|---|---|---|---|---|---|---|---|---|---|---|
| 1 | 31.4 | 0.030 | 1.5 | 1.5 | 1.0 | 165 | 165 | 330 | 10 | 68.9 | 27 | 80 |
| 2 | 23.5 | 0.023 | 1.5 | 1.5 | 1.0 | 215 | 215 | 430 | 10 | 68.9 | 27 | 80 |
| 3 | 27.6 | 0.027 | 1.5 | 1.5 | 1.0 | 183 | 183 | 366 | 10 | 68.9 | 38 | 100 |
| 4 | 29.0 | 0.028 | 1.5 | 1.5 | 1.0 | 177 | 177 | 354 | 40 | 276. | 27 | 80 |
| 5 | 36.7 | 0.036 | 1.5 | 1.5 | 1.0 | 138 | 138 | 276 | 40 | 276. | 27 | 80 |
| 6 | 26.9 | 0.026 | 1.5 | 1.5 | 1.0 | 190 | 190 | 380 | 40 | 276. | 38 | 100 |
| 7 | 33.7 | 0.032 | 1.5 | 1.5 | 1.0 | 155 | 155 | 310 | 4 | 27.6 | 60 | 140 |
| 8 | 38.6 | 0.037 | 1.5 | 1.5 | 1.0 | 134 | 134 | 268 | 4 | 27.6 | 60 | 140 |
| 9 | 26.7 | 0.026 | 2.0 | 1.0 | 1.0 | 250 | 127 | 377 | 10 | 68.9 | 27 | 80 |
| 10 | 23.3 | 0.022 | 2.0 | 1.0 | 1.0 | 295 | 150 | 445 | 10 | 68.9 | 38 | 100 |
| 11 | 38.0 | 0.037 | 2.0 | 1.0 | 1.0 | 176 | 89 | 265 | 40 | 276. | 27 | 80 |
| 12 | 24.9 | 0.024 | 2.0 | 1.0 | 1.0 | 271 | 138 | 409 | 40 | 276. | 38 | 100 |
| 13 | 30.4 | 0.029 | 2.5 | 0.5 | 1.0 | 278 | 57 | 335 | 10 | 68.9 | 27 | 80 |
| 14 | 28.5 | 0.027 | 2.5 | 0.5 | 1.0 | 299 | 61 | 360 | 10 | 68.9 | 38 | 100 |
| 15 | 27.2 | 0.026 | 3.0 | 0 | 1.0 | 381 | 0 | 381 | 10 | 68.9 | 27 | 80 |

TABLE III continued
Polymerizing Butene-1 Over Supported $TiCl_4$ Catalyst in Liquid Butene-1
Cocatalyst Composition Contains Ethyl Benzoate

| | Product | | | | |
|---|---|---|---|---|---|
| Run No. | Yield g | Productivity g/g Catalyst Component (A) | hrs. | Hexane Insoluble % | Melt Index g/10 min. |
| 1 | 55.4 | 1765 | 1.0 | 98 | 0.3 |
| 2 | 54.7 | 2330 | 2.5 | 96 | 0.2 |
| 3 | 70.6 | 2560 | 2.5 | 96 | 0.4 |
| 4 | 48.1 | 1660 | 1.0 | 95 | 1.6 |
| 5 | 131.2 | 3575 | 2.5 | 96 | 2.8 |
| 6 | 85.1 | 3165 | 2.5 | 98 | 2.3 |
| 7 | 34.2 | 1010 | 1.0 | 92 | 13.1 |
| 8 | 49.8 | 1290 | 2.5 | 92 | 13.9 |
| 9 | 86.4 | 3235 | 2.5 | 97 | 0.2 |
| 10 | 78.7 | 3380 | 2.5 | 96 | 0.8 |
| 11 | 136.5 | 3590 | 2.5 | 95 | 1.9 |
| 12 | 100.0 | 4015 | 2.5 | 96 | 2.3 |
| 13 | 125.8 | 4140 | 2.5 | 95 | 0.2 |
| 14 | 122.6 | 4300 | 2.5 | 96 | 0.5 |
| 15 | 84.7 | 3115 | 2.5 | 96 | 0.2 |

The data presented in Table III show that good yields of hexane insoluble polymer are obtained with the catalyst (A) and a cocatalyst (B) containing ethyl benzoate at reaction temperatures ranging from about 27-38°C. However, as noted previously, at a reaction temperature of 60°C, Runs 7, 8, the yield of polymer is cut about in half although specificity to hexane insoluble polymer remains high. In Runs 12-14 polymers exhibiting hexane insoluble contents of about 95-96% and productivity exceeding 4ooo g polymer per g catalyst component (A) are produced in 2.5 hours with TEA/DEAC mole ratios ranging from 2-5:1 at reaction temperatures of 27-38°C.

## Example IV

Control runs were conducted in liquid butene-1 and in butene-1/saturated hydrocarbon mixtures with commercially available titanium trichloride catalysts prepared by reducing titanium tetrachloride with aluminum. Such catalysts are believed to be $TiCl_3 \cdot 1/3\ AlCl_3$ in composition. The process conditions were similar to those employed in the other examples. The conditions employed and results obtained are given in Table IV.

TABLE IV

Control Runs Polymerizing Butene-1 Over Catalyst System Comprising $TiCl_3$ and DEAC

| Run No. | Catalyst(A) Total(A) Wt. mg | Catalyst(A) Calc. $TiCl_3$ m. moles | Diluent Type | Diluent Volume Ratio | Mole Ratios[(2)] Al/Ti | Mole Ratios[(2)] TPP/Ti | Hydrogen psi | Hydrogen kPa | Reaction Temperature °C | Reaction Temperature °F |
|---|---|---|---|---|---|---|---|---|---|---|
| 1 | 52.1 | 0.262 | Butene-1 | - | 25 | 0 | 0 | 0 | 27 | 80 |
| 2 | 49.8 | 0.250 | Butene-1 | - | 26 | 0 | 0 | 0 | 60 | 140 |
| 3 | 58.5 | 0.294 | Butene-1 | | 22 | 0 | 2 | 13.8 | 60 | 140 |
| 4 | 48.1 | 0.246 | Butene-1 | | 20 | 0 | 2 | 13.8 | 60 | 140 |
| 5 | 42.5 | 0.214 | Butene-1 | | 31 | 0 | 2 | 13.8 | 60 | 140 |
| 6 | 45.8 | 0.230 | Butene-1/Cyclohexane | 1/1 | 29 | 0 | 2 | 13.8 | 60 | 140 |
| 7 | 48.5 | 0.244 | Butene-1/Cyclohexane | 1/1 | 27 | 0 | 2 | 13.8 | 60 | 140 |
| 8 | 41.9 | 0.211 | Butene-1/Isobutane | 1/3 | 31 | 0 | 40 | 276. | 60 | 140 |
| 9[(1)] | 30.3 | 0.152 | Butene-1 | - | 33 | 0 | 2 | 13.8 | 60 | 140 |
| 10 | 43.1 | 0.216 | Butene-1 | - | 23 | 0 | 2 | 13.8 | 60 | 140 |
| 11 | 48.5 | 0.244 | Butene-1 | - | 20 | 0.10 | 4 | 27.6 | 60 | 140 |
| 12 | 35.7 | 0.180 | Butene-1 | - | 28 | 0.15 | 4 | 27.6 | 60 | 140 |
| 13 | 42.1 | 0.212 | Butene-1 | - | 23 | 0.20 | 4 | 27.6 | 60 | 140 |
| 14 | 66.1 | 0.332 | Butene-1 | - | 15 | 0.10 | 4 | 27.6 | 80 | 175 |
| 15 | 67.0 | 0.337 | Butene-1/ Cyclohexane | 1/1 | 15 | 0.15 | 4 | 27.6 | 60 | 140 |

TABLE IV continued
Control Runs Polymerizing Butene-1 Over Catalyst System Comprising $TiCl_3$ and DEAC

| | | Product | | | |
|---|---|---|---|---|---|
| Run No. | Yield g | Productivity g/g Catalyst Component (A) | hrs. | Hexane Insoluble % | Melt Index g/10 min. |
| 1 | 4.4 | 85 | 1.0 | 83 | 12.2 |
| 2 | 53.0 | 930 | 1.0 | 92 | 1.9 |
| 3 | 34.6 | 590 | 1.0 | 87 | 0.4 |
| 4 | 51.7 | 1075 | 2.0 | 82 | 0.3 |
| 5 | 52.9 | 1245 | 2.5 | 80 | 0.4 |
| 6 | 15.7 | 345 | 1.0 | 92 | 0.4 |
| 7 | 36.1 | 745 | 2.5 | 86 | 1.3 |
| 8 | 31.0 | 740 | 2.5 | 87 | 170. |
| 9 | 23.1 | 760 | 1.0 | 84 | 0.4 |
| 10 | 66.8 | 1550 | 2.5 | 84 | 0.8 |
| 11 | 43.4 | 895 | 2.5 | 93 | 0.6 |
| 12 | 26.2 | 735 | 2.5 | 95 | 0.4 |
| 13 | 28.1 | 665 | 2.5 | 96 | 0.4 |
| 14 | 118.7 | 1795 | 2.5 | 86 | 0.6 |
| 15 | 40.1 | 600 | 2.5 | 97 | 1.1 |

Stauffer catalyst 2.1 was used in Runs 1-8.
Stauffer catalyst 1.1 was used in Runs 9-15.

(1) Catalyst milled 22.5 hours in a 0.25 liter vessel with 300 g steel balls. Catalyst sample taken from milled catalyst.

(2) Triphenyl phosphite written as TPP.

The results obtained in Runs 1, 2 and 14 indicate that yields are increased as the reaction temperature is increased from about 27°C to about 80°C. The results also show that in Runs 3-5, that as the reaction times increase from 1 to 2.5 hours, the specificity toward hexane insoluble polymer decreases from about 37% to about 80%. In order to achieve specificities to hexane insoluble polymer in the ranges obtainable with that shown in the instant invention, it is necessary to employ triphenyl phosphite (TPP) as a catalyst adjuvant. However, polymer yields are substantially diminished to about 600-800 g polymer per g catalyst under these conditions.

The results shown in Example IV are considered to be comparative in nature. They illustrate the difference in behavior in polymer yields and specificity under reaction conditions of $TiCl_3 \cdot 1/3\ AlCl_3$ catalyst systems and the catalyst systems employed in my process.

The disclosure, including data, has illustrated the value and effectiveness of our invention. The examples, knowledge and background of the field of the invention, and of general principles of chemistry and engineering, have formed the bases from which the broad description of our invention, including the ranges of conditions and generic groups of operant components have been developed, and have formed the bases for our claims here appended.

26 497 E

# C L A I M S

1. A process for polymerization of butene-1 by contacting butene-1 at a temperature in the range of 21° C. to 60° C. with a catalyst system comprising
   (A) a catalyst comprising effective ratios of a milled admixture of a titanium halide, magnesium or manganous chloride and a Lewis base
   and
   (B) a cocatalyst comprising effective ratios of a trihydrocarbyl aluminum compound, a further Lewis base, and a dialkyl aluminum halide,
   employing catalytically effective ratios of (B):(A), characterized in that said milled admixture comprises an unsaturated aliphatic hydrocarbon compound.

2. A process according to claim 1) characterized in that said titanium halide is represented by $TiX_{4-n}R_n$, wherein X is a halogen and is bromine, chlorine, or iodine, R is an alkyl, cycloalkyl, aryl, aryloxy, or alkoxy radical of 2 to 8 carbon atoms, and n is zero or an integer of 1,2 or 3.

3. A process according to claim 1) or 2) characterized in that said Lewis base and said further Lewis base is an amine, amide, ether, carboxylic acid, carboxylic acid ester, ketone, nitrile, or phosphine.

4. A process according to one of the preceding claims characterized in that each of said Lewis base and said further Lewis base is selected from the group consisting of triethylamine, triphenylamine, diphenyl amine, acetamide, butyramide, acetanilide, dimethyl ether, diethyl ether, ethylbutyl ether, diphenyl ether, acetic acid, benzoic acid acetone, methyl n-butyl ketone, acetophenone, acetonitrile, isobutyronitrile, benzonitrile, tributylphosphine, propyl-(n-pentyl)phosphine, triphenylphosphine, ethyl benzoate, ethyl anisate, (p-methoxybenzoate), ethyl p-di-methylaminobenzoate, ethyl p-fluorobenzoate, ethyl p-cyanobenzoate, methyl benzoate, isopropyl p-diethylaminobenzoat

butyl p-fluorobenzoate, n-propyl p-cyanobenzoate, ethyl p-trifluoromethylbenzoate, methyl p-hydroxybenzoate, ethyl p-methoxycarbonylbenzoate, methyl p-acetylbenzoate, isopropyl p-formylbenzoate, methyl p-nitrobenzoate, ethyl p-carbamoylbenzoate, methyl p-mercaptobenzoate, methyl-p-chlorobenzoate, n-butyl-p-bromobenzoate, isopropyl-p-iodobenzoate, ethyl-p-aminobenzoate, n-propyl-p-methylaminobenzoate, methyl-p-acetamidobenzoate, n-butyl-p-formylbenzoate, dimethyl terephthalate, ethyl-p-(N,N-dimethylcarbamoyl benzoate, n-propyl-p-(methylsulfonyl)benzoate, methyl-p-trifluoromethylbenzoate, ethyl-p-acetoxybenzoate and mixtures thereof.

5. A process according to one of the preceding claims characterized in that said manganous or magnesium chloride is magnesium chloride, said Lewis base is ethylbenzoate, said titanium halide is titanium tetrachloride, and said unsaturated component is propylene, neohexene, octene, 4-methylpentene-1, 4-methylpentene-2, diisobutylene, trichloroethylene, tetrachloroethylene, 1,5-octadiene, cycloheptatriene, phenylacetylene, or hexene-1.

6. A process according to one of the preceding claims characterized in that said manganous or magnesium chloride is magnesium chloride, said Lewis base is ethylbenzoate or ethyl anisate, said titanium halide is titanium tetrachloride, said unsaturated component is hexene-1; said trihydrocarbylaluminum compound is triethylaluminum, and said dialkylaluminum halide is diethylaluminum chloride.

0002522

European Patent Office

# EUROPEAN SEARCH REPORT

Application number
EP 78 10 1666

| Category | Citation of document with indication, where appropriate, of relevant passages | Relevant to claim | CLASSIFICATION OF THE APPLICATION (Int. Cl.²) |
|---|---|---|---|
| | FR - A - 2 291 986 (I.C.I.)<br>* Claims 1-3,5,9,11-16; page 1, lines 35-40; page 2, lines 13-33; page 3, lines 18-25; page 4, line. 37 - page 5, line 33; page 7, lines 4-12 *<br>-- | 1-5 | C 08 F 110/08<br>4/64<br>4/02 |
| A | GB - A - 1 435 768 (MONTECATINI-EDISON)<br>* Claims 1,2,4-9; page 3, lines 20-33 *<br>-- | | |
| A | FR - A - 2 326 429 (NIPPON OIL)<br>* Claims 1-9; page 5, lines 18-23 *<br>---- | | TECHNICAL FIELDS SEARCHED (Int.Cl.²)<br>C 08 F 10/00 -<br>10/14<br>110/00 -<br>110/14<br>210/00<br>210/18<br>4/02 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 21-03-1979 | WEBER |

EPO Form 1503.1 06.78